# EUROPEAN PATENT APPLICATION

(11) **EP 4 844 599 A1**
(43) Date of publication of application: **25.11.2026**
(21) Application number: 24921498.2
(22) Date of filing: 08.10.2024
(51) Int. Cl.: G06F 15/173, H04L 12/28

(54) **SERVER, SERVER MANAGEMENT METHOD AND APPARATUS, COMPUTER DEVICE, AND MEDIUM**

(30) Priority: 29.01.2024 CN 202410128412
(71) Applicant: Huawei Technologies Co., Ltd., Shenzhen, Guangdong 518129 (CN)
(72) Inventor: LIANG, Chao, Shenzhen, Guangdong 518129 (CN); MA, Baofei, Shenzhen, Guangdong 518129 (CN); LI, An, Shenzhen, Guangdong 518129 (CN)
(74) Representative: Huawei European IPR
(86) International application number: PCT/CN2024/123417
(87) International publication number: WO 2025/161474

(57) **Abstract**

A server, a server management method and apparatus, a computer device, and a medium are disclosed, relating to the field of computer technologies. The server includes a chassis and a plurality of server units, where the plurality of server units are all located in the chassis, and any two of the plurality of server units are connected; and the plurality of server units have a first networking mode and a second networking mode, where the first networking mode and the second networking mode are each used to describe a connection relationship between the plurality of server units, and a connection relationship described in the first networking mode is different from a connection relationship described in the second networking mode. The server is applicable to different service scenarios, and can meet networking requirements in different service scenarios.

## Description

This application claims priority to Chinese Patent Application No. 202410128412.7, filed on January 29, 2024 and entitled "SERVER, SERVER MANAGEMENT METHOD AND APPARATUS, COMPUTER DEVICE, AND MEDIUM", which is incorporated herein by reference in its entirety.

### TECHNICAL FIELD

This application relates to the field of computer technologies, and in particular, to a server, a server management method and apparatus, a computer device, and a medium.

### BACKGROUND

Mobile network operators or wireless service providers need to deploy servers to provide various services such as telephone services for users.

In related technologies, a server includes a chassis and a plurality of server units located in the chassis. The plurality of server units are connected based on a specified network topology to form a corresponding network architecture.

However, the network architecture corresponding to the server is inflexible, and it is difficult to meet networking requirements in different service scenarios.

### SUMMARY

This application provides a server, a server management method and apparatus, a computer device, and a medium. The server can meet networking requirements in different service scenarios.

According to a first aspect, this application provides a server. The server includes a chassis and a plurality of server units. The plurality of server units are all located in the chassis. Any two of the plurality of server units are connected, that is, a connection channel exists between any two server units. The plurality of server units have a first networking mode and a second networking mode, where the first networking mode and the second networking mode are each used to describe a connection relationship between the plurality of server units, and a connection relationship described in the first networking mode is different from a connection relationship described in the second networking mode.

Herein, the connection relationship indicates whether a connection channel between every two server units is enabled. When the connection channel between the two server units is enabled, the two server units may use the connection channel to perform data transmission. When the connection channel between the two server units is not enabled, the two server units cannot use the connection channel to perform data transmission. That the connection relationship described in the first networking mode is different from the connection relationship described in the second networking mode means that, in the first networking mode and the second networking mode, enable statuses of at least one connection channel are different.

In this application, in different service scenarios, the plurality of server units in the server may use different networking modes, to meet networking requirements in different service scenarios.

In a possible implementation, the first networking mode is dual-star networking, and the second networking mode is full-interconnection networking. For the full-interconnection networking, connection channels between all server units are enabled. For the dual-star networking, two server units serve as a first switching unit and a second switching unit, a connection channel between the first switching unit and the second switching unit, a connection channel between the first switching unit and a server unit other than the first switching unit and the second switching unit, and a connection channel between the second switching unit and a server unit other than the first switching unit and the second switching unit are enabled, and a connection channel between all server units other than the first switching unit and the second switching unit is not enabled. Therefore, the connection relationships described in the dual-star networking and the full-interconnection networking are different.

When the plurality of server units use the dual-star networking, the dual-star networking may be used in a low-traffic service scenario, and traffic of all server units is aggregated and forwarded by the first switching unit or the second switching unit. When the plurality of server units use the full-interconnection networking, the full-interconnection networking may be used in a high-traffic service scenario. In some high-traffic scenarios, the first switching unit, the second switching unit, and another server unit may directly access an external network, to implement data receiving and sending. In some other high-traffic scenarios, a first part of server units may directly access an external network, and another server unit do not need to directly access the external network, but access the external network through the first part of server units. However, data transmission can be directly performed between all server units.

Optionally, the chassis includes a plurality of connection interfaces, and each of the plurality of server units is connected to one of the plurality of connection interfaces. The plurality of server units include a first switching unit, a second switching unit, and at least two service units, a first service unit among the at least two service units includes a plurality of ports, the plurality of ports include a first port connected to the first switching unit, a second port connected to the second switching unit, and a third port connected to a second service unit, and the first service unit and the second service unit are any two of the at least two service units. That is, each port of the first service unit is connected to a corresponding server unit other than the first service unit. In this way, a connection exists between any two server units in the server.

When the first service unit is connected to different connection interfaces among the plurality of connection interfaces, an arrangement location of the first port of the first service unit among the plurality of ports of the first service unit remains unchanged, and an arrangement location of the second port of the first service unit among the plurality of ports of the first service unit remains unchanged. In this way, regardless of which connection interface is connected to the first service unit, the first service unit can be connected to the first switching unit through the same port, and the first service unit can be connected to the second switching unit through the same port, thereby implementing normalization of the service units. In this case, after locations of the first switching unit and the second switching unit are determined, the service unit may be randomly inserted, thereby reducing operation difficulty and helping improve networking efficiency of the server.

Optionally, the service unit may directly access an external network, or needs to access an external network through another server unit that can directly access the external network.

Optionally, the server further includes a backplane, where the backplane is located in the chassis and is connected to each of the plurality of server units. The backplane is configured to implement the connection between all server units, to simplify wiring and further improve networking efficiency of the server.

In some examples, the backplane is an optical backplane. In some other examples, the backplane is an electrical backplane. During implementation, a proper backplane type may be selected based on a requirement.

Optionally, at least one of the first switching unit and the second switching unit includes: a first mainboard, a first control module, a first interconnection module, and a first network module, where the first control module, the first interconnection module, and the first network module are all mounted on the first mainboard, and the first control module is electrically connected to the first interconnection module and the first network module separately.

In a possible implementation, the service unit includes a second mainboard, a second control module, and a second interconnection module, where the second control module and the second interconnection module are mounted on the second mainboard, and the second control module is electrically connected to the second interconnection module.

In a possible implementation, the service unit includes a third mainboard, a third control module, a third interconnection module, and a third network module, where the third control module, the third interconnection module, and the third network module are all mounted on the third mainboard, and the third network module is electrically connected to the third interconnection module and the third control module separately.

Optionally, the plurality of connection interfaces are arranged in an array, for example, in a one-dimensional array. A connection interface connected to the first switching unit and a connection interface connected to the second switching unit are two connection interfaces located in a central position of the plurality of connection interfaces. That is, the server units connected to the two connection interfaces located in the central position serve as the first switching unit and the second switching unit. In this way, signal routing distances between the first switching unit and each service unit and between the second switching unit and each service unit are short, and a loss is small, to help improve signal quality.

Optionally, the server further includes a first management unit, where the first management unit is connected to each of the plurality of server units, and the first management unit is configured to control a networking mode of the plurality of server units. By arranging the first management unit, networking modes of the plurality of server units may be automatically controlled.

Optionally, the server is a blade server, the server unit is a card-shaped server unit, and the connection interface is a slot. The blade server has low costs.

According to a second aspect, this application provides a server management method. The method may be used to control a networking mode of the server in the first aspect. The method includes: obtaining information about a plurality of server units; determining a target networking mode based on the information about the server units, where the target networking mode indicates a connection relationship between the plurality of server units; and configuring a connection channel between the plurality of server units based on the target networking mode.

Optionally, the information about the server units includes types of the server units, and the types of the server units include a service node and a switching node.

Optionally, the information about the server units further includes locations of the server units, where the locations of the server units indicate a connection interface connected to the server unit.

Optionally, the determining the target networking mode based on the information about the server units includes: when the plurality of server units are all service units, determining that the target networking mode is full-interconnection networking; or when the plurality of server units include two switching units and a plurality of service units, determining that the target networking mode is dual-star networking; or when the plurality of server units include two switching units and a plurality of service units, and the two switching units are at target locations, determining that the target networking mode is dual-star networking.

According to a third aspect, this application provides a server management apparatus. The server management apparatus has a function of implementing the method according to the second aspect or any one of the optional manners of the second aspect. The function may be implemented by hardware, or may be implemented by hardware executing corresponding software. The hardware or the software includes one or more units corresponding to the foregoing function.

According to a fourth aspect, a computer device is provided. The computer device includes a processor and a memory. The memory is configured to store a software program and a module. The processor runs or executes the software program and/or the module stored in the memory, to implement the method according to the second aspect or any one of the possible implementations of the second aspect.

Optionally, there are one or more processors, and there are one or more memories.

Optionally, the memory may be integrated with the processor, or the memory and the processor are arranged separately.

In a specific implementation process, the memory may be a non-transitory (non-transitory) memory, for example, a read-only memory (read-only memory, ROM). The memory and the processor may be integrated into one chip, or may be arranged on different chips. A type of the memory and an arrangement manner of the memory and the processor are not limited in embodiments of this application.

According to a fifth aspect, a computer program product is provided. The computer program product includes computer program code. When the computer program code is run by a computer, the computer is caused to perform the method according to the second aspect or any one of the possible implementation of the second aspect.

According to a sixth aspect, this application provides a computer-readable storage medium. The computer-readable storage medium is configured to store program code executed by a processor, and the program code is used to implement the method according to the second aspect or any one of the possible implementations of the second aspect.

According to a seventh aspect, this application provides a chip, including a processor. The processor is configured to invoke instructions from a memory, and run the instructions stored in the memory, to cause a computer device on which a chip is installed to perform the method according to the second aspect or any one of the possible implementations of the second aspect.

According to an eighth aspect, this application provides another chip. The another chip includes an input interface, an output interface, a processor, and a memory. The input interface, the output interface, the processor, and the memory are connected to each other through an internal connection path. The processor is configured to execute code in the memory. When the code is executed, the processor is configured to perform the method according to the second aspect or any one of the possible implementations of the second aspect.

### BRIEF DESCRIPTION OF DRAWINGS

FIG. 1 is a diagram of a structure of a server according to an embodiment of this application;
FIG. 2 is a diagram of a connection relationship between all server units in the server in FIG. 1;
FIG. 3 is a diagram of another connection relationship between all server units in the server in FIG. 1;
FIG. 4 is a diagram of a structure of another server according to an embodiment of this application;
FIG. 5 is a diagram of a connection relationship between all server units in the server in FIG. 4;
FIG. 6 is a diagram of another connection relationship between all server units in the server in FIG. 4;
FIG. 7 is a diagram of still another connection relationship between all server units in the server in FIG. 4;
FIG. 8 is a diagram of yet another connection relationship between all server units in the server in FIG. 4;
FIG. 9 is a diagram of a structure of a server unit according to an embodiment of this application;
FIG. 10 is a diagram of a structure of another server unit according to an embodiment of this application;
FIG. 11 is a diagram of a structure of still another server unit according to an embodiment of this application;
FIG. 12 is a diagram of a structure of still another server according to an embodiment of this application;
FIG. 13 is a schematic flowchart of a server management method according to an embodiment of this application;
FIG. 14 is a diagram of a server management apparatus according to an embodiment of this application; and
FIG. 15 is a diagram of a structure of a computer device according to an embodiment of this application.

### DESCRIPTION OF EMBODIMENTS

To make objectives, technical solutions, and advantages of this application clearer, the following further describes implementations of this application in detail with reference to the accompanying drawings.

Embodiments of this application provide a server. The server includes a chassis and a plurality of server units. The plurality of server units are all located in the chassis. Any two of the plurality of server units are connected. The plurality of server units have a first networking mode and a second networking mode, where the first networking mode and the second networking mode are each used to describe a connection relationship between the plurality of server units, and a connection relationship described in the first networking mode is different from a connection relationship described in the second networking mode.

Herein, the connection relationship indicates whether a connection channel between every two server units is enabled. When the connection channel between the two server units is enabled, the two server units may use the connection channel to perform data transmission. When the connection channel between the two server units is not enabled, the two server units cannot use the connection channel to perform data transmission. That the connection relationship described in the first networking mode is different from the connection relationship described in the second networking mode means that, in the first networking mode and the second networking mode, enable statuses of at least one connection channel are different.

In embodiments of this application, each of two ends of each connection channel is connected to a port of one server unit. Enabling a connection channel means that two server units connected to two ends of the connection channel both enable ports connected to the connection channel. If any one of the two server units connected to the two ends of the connection channel disables a port connected to the connection channel, the connection channel is not enabled.

In embodiments of this application, the first networking mode and the second networking mode are applicable to different service scenarios. Therefore, different networking modes may be selected in different service scenarios, to meet networking requirements in the different service scenarios.

In some embodiments, the server is a blade server. Correspondingly, the server unit is a card-shaped (also referred to as blade-shaped) server unit, and a connection interface is a slot (slot). The blade server is a server in which a plurality of card-shape server units can be inserted into a standard-height chassis, and is a low-cost server platform that can implement high availability high density (high availability high density, HAHD). In another embodiment, the server is a rack server, and a connection interface is an optical fiber interface, a network interface, or the like.

The following uses a blade server as an example to describe a structure and a working principle of the server provided in embodiments of this application.

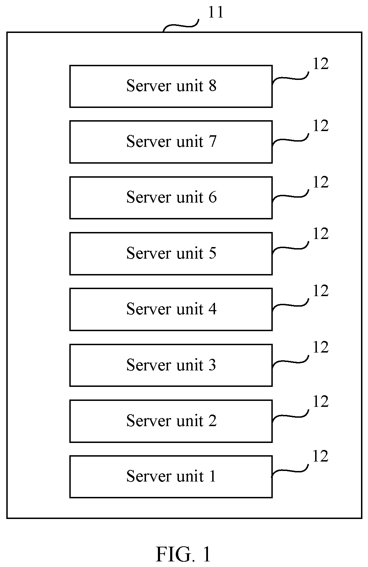

FIG. 1 is a diagram of a structure of a server according to an embodiment of this application. As shown in FIG. 1, the server is a blade server, and the blade server includes a chassis 11 and a plurality of server units 12. For the blade server, the server unit 12 may also be referred to as a node or a blade.

Optionally, the blade server includes 2N server units 12. N is a positive integer. For example, N is equal to 2, 3, 4, 8, or the like. In FIG. 1, an example in which N is equal to 4 is used for illustration. That is, there are eight server units 12 in FIG. 1. Correspondingly, the chassis 11 includes eight slots, and each server unit 12 is inserted into one slot, so that the server units 12 are arranged in the chassis 11.

Any two of the server units 12 are connected, that is, there is a connection channel between every two server units 12. The plurality of server units 12 have a first networking mode and a second networking mode, where the first networking mode and the second networking mode are each used to describe a connection relationship between the plurality of server units 12, and a connection relationship described in the first networking mode is different from a connection relationship described in the second networking mode.

In this embodiment of this application, the plurality of server units 12 include a first switching unit, a second switching unit, and at least two service units. That is, there are two switching units in the server, and units other than the two switching units are service units. A plurality of ports of a first service unit include a first port connected to the first switching unit, a second port connected to the second switching unit, and a third port connected to a second service unit, and the first service unit and the second service unit are any two of the at least two service units.

When the first service unit is connected to different connection interfaces, an arrangement location of the first port of the first service unit among the plurality of ports of the first service unit remains unchanged, and an arrangement location of the second port of the first service unit among the plurality of ports of the first service unit remains unchanged.

It is assumed that the first service unit has X ports that are sequentially arranged in a specific direction, where X is an integer greater than 2. When the first service unit is connected to a connection interface of the chassis, an i^{th} port of the first service unit is connected to the first switching unit, that is, the i^{th} port is the first port, and a j^{th} port of the first service unit is connected to the second switching unit, that is, the j^{th} port is the second port. When the first service unit is connected to another connection interface of the chassis, the i^{th} port of the first service unit is still connected to the first switching unit, and the j^{th} port of the first service unit is connected to the second switching unit. In this way, regardless of which connection interface is connected to the first service unit, the first service unit can be connected to the first switching unit through the same port, and the first service unit can be connected to the second switching unit through the same port, thereby implementing normalization of the service unit.

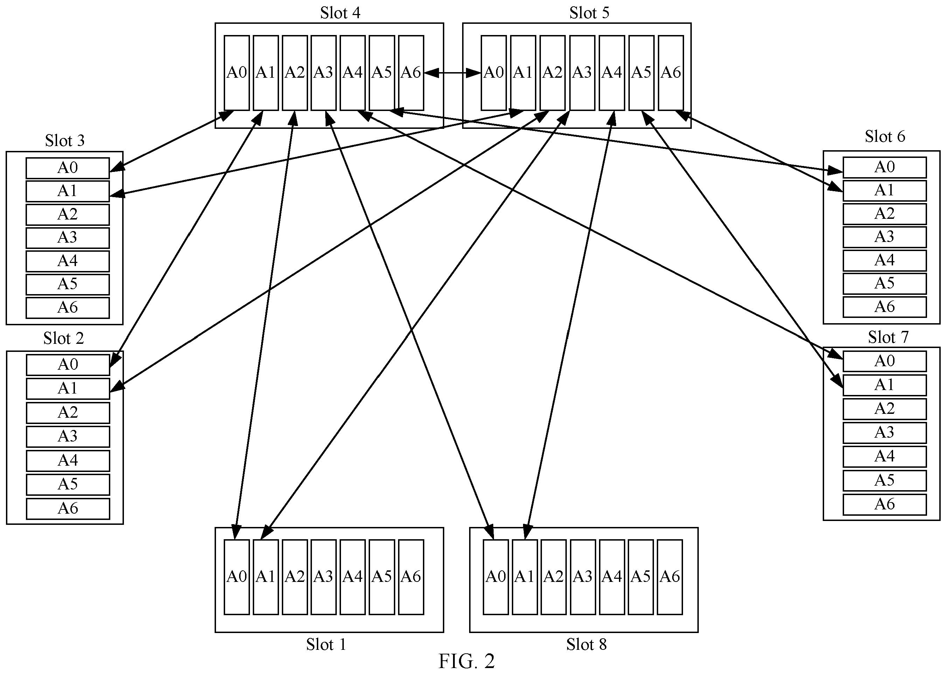

FIG. 2 is a diagram of a connection relationship between all server units in the server in FIG. 1. For example, in FIG. 2, the chassis includes eight slots: a slot 1 to a slot 8. Each server unit includes seven ports: A0, ..., and A6. Server units connected to the slot 4 and the slot 5 are the first switching unit and the second switching unit respectively. Regardless of which slot other than the slot 4 and the slot 5 is connected to server units, ports A0 of the server units are connected to the first switching unit connected to the slot 4. In this case, after locations of the first switching unit and the second switching unit are determined, the service unit may be randomly inserted, thereby reducing operation difficulty and helping improve networking efficiency of the server.

**Table 1 Dual-star topology**

| | Slot 1 | Slot 2 | Slot 3 | Slot 4 | Slot 5 | Slot 6 | Slot 7 | Slot 8 |
|---|---|---|---|---|---|---|---|---|
| Slot 1 | - | - | - | A0-A2 | A1-A3 | - | - | - |
| Slot 2 | - | - | - | A0-A1 | A1-A2 | - | - | - |
| Slot 3 | - | - | - | A0-A0 | A1-A1 | - | - | - |
| Slot 4 | A0-A2 | A0-A1 | A0-A0 | - | A6-A0 | A5-A0 | A4-A0 | A3-A0 |
| Slot 5 | A1-A3 | A1-A2 | A1-A1 | A6-A0 | - | A6-A1 | A5-A1 | A4-A1 |
| Slot 6 | - | - | - | A5-A0 | A6-A1 | - | - | - |
| Slot 7 | - | - | - | A4-A0 | A5-A1 | - | - | - |
| Slot 8 | - | - | - | A3-A0 | A4-A1 | - | - | - |

The connection relationship corresponding to FIG. 2 is shown in Table 1. In a connection manner shown in FIG. 2, all server units in the server form a dual-star topology. The dual-star topology may be used in a low-traffic service scenario, and traffic of all server units 12 is aggregated and forwarded by the first switching unit or the second switching unit.

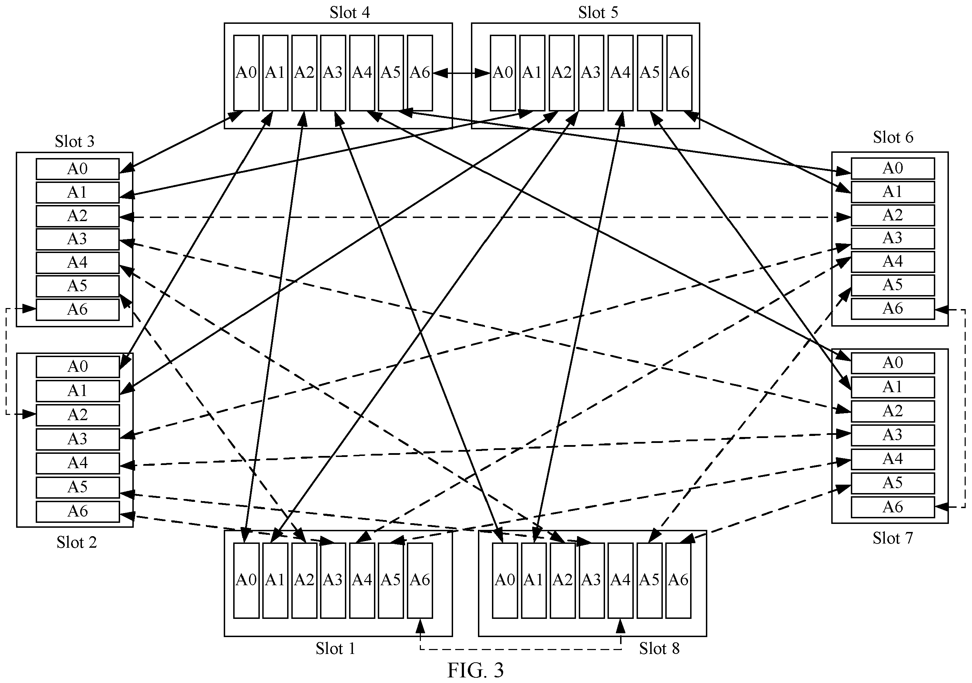

FIG. 3 is a diagram of another connection relationship between all server units in the server in FIG. 1. A dashed line in FIG. 3 represents a connection between service units. As shown in FIG. 3, based on FIG. 2, ports, not connected to the first switching unit and the second switching unit, of all service units are interconnected, to ensure that each service unit is connected to all other service units. The connection relationship between all server units after the connection is shown in Table 2. In a connection manner shown in FIG. 3, all server units in the server form a full-interconnection topology. The full-interconnection topology may be used in a high-traffic service scenario, and all server units including the first switching unit and the second switching unit may directly access an external network, to implement data receiving and sending. Alternatively, a part of server units may directly access an external network, and the other part of server units does not need to directly access the external network, but access the external network via the server unit that can directly access the external network. For example, the first switching unit and the second switching unit may directly access the external network, and the other server units access the external network via the first switching unit and the second switching unit. For another example, the first switching unit, the second switching unit, and another server unit may directly access the external network, and the other server units access the external network via the three server units.

**Table 2 Full-interconnection topology**

| | Slot 1 | Slot 2 | Slot 3 | Slot 4 | Slot 5 | Slot 6 | Slot 7 | Slot 8 |
|---|---|---|---|---|---|---|---|---|
| Slot 1 | - | A3-A6 | A2-A5 | A0-A2 | A1-A3 | A4-A4 | A5-A4 | A6-A4 |
| Slot 2 | A3-A6 | - | A2-A6 | A0-A1 | A1-A2 | A3-A3 | A4-A3 | A5-A3 |
| Slot 3 | A2-A5 | A2-A6 | - | A0-A0 | A1-A1 | A2-A2 | A3-A2 | A4-A2 |
| Slot 4 | A0-A2 | A0-A1 | A0-A0 | - | A6-A0 | A5-A0 | A4-A0 | A3-A0 |
| Slot 5 | A1-A3 | A1-A2 | A1-A1 | A6-A0 | - | A6-A1 | A5-A1 | A4-A1 |
| Slot 6 | A4-A4 | A3-A3 | A2-A2 | A5-A0 | A6-A1 | - | A6-A6 | A5-A5 |
| Slot 7 | A5-A4 | A4-A3 | A3-A2 | A4-A0 | A5-A1 | A6-A6 | - | A6-A5 |
| Slot 8 | A6-A4 | A5-A3 | A4-A2 | A3-A0 | A4-A1 | A5-A5 | A6-A5 | - |

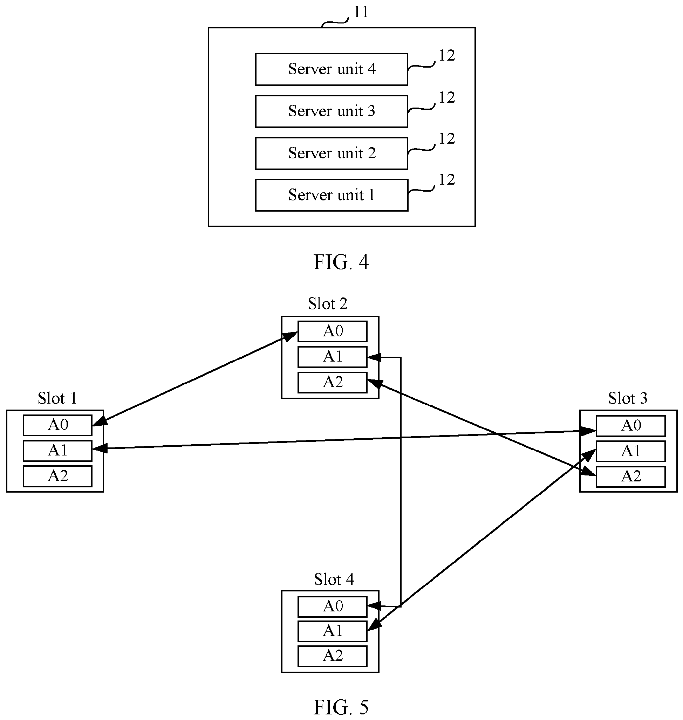

FIG. 4 is a diagram of a structure of another server according to an embodiment of this application. A difference from the embodiment shown in FIG. 1 lies in that there are four server units 12 in the server. The four server units 12 are located in a chassis 11.

FIG. 5 is a diagram of a connection relationship between all server units in the server in FIG. 4. In FIG. 5, the chassis includes 4 slots: a slot 1 to a slot 4. Each server unit 12 includes 3 ports: A0, ..., and A2. Server units 12 connected to the slot 2 and the slot 3 are a first switching unit and a second switching unit respectively. Regardless of which slot other than the slot 2 and the slot 3 is connected to server units 12, ports A0 of the server units 12 are connected to the first switching unit connected to the slot 2.

The connection relationship corresponding to FIG. 5 is shown in Table 3. In a connection manner shown in FIG. 5, all server units in the server form a dual-star topology, which is applicable to a low-traffic service scenario.

**Table 3 Dual-star topology**

| | Slot 1 | Slot 2 | Slot 3 | Slot 4 |
|---|---|---|---|---|
| Slot 1 | - | A0-A0 | A1-A0 | - |
| Slot 2 | A0-A0 | - | A2-A2 | A1-A0 |
| Slot 3 | A1-A0 | A2-A2 | - | A1-A1 |
| Slot 4 | - | A1-A0 | A1-A1 | - |

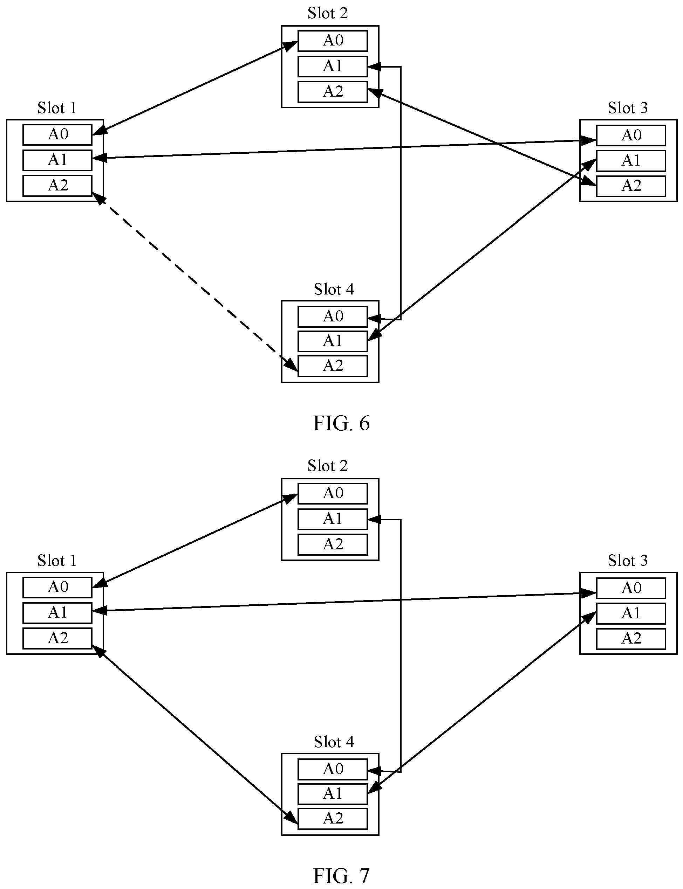

FIG. 6 is a diagram of another connection relationship between all server units in the server in FIG. 4. A dashed line in FIG. 6 represents a connection between service units. As shown in FIG. 6, based on FIG. 5, ports, not connected to the first switching unit and the second switching unit, of all service units are interconnected, to ensure that each service unit is connected to all other service unit. The connection relationship between all server units after the connection is shown in Table 4. In a connection manner shown in FIG. 6, all server units in the server form a full-interconnection topology, which is applicable to a high-traffic service scenario.

**Table 4 Full-interconnection topology**

| | Slot 1 | Slot 2 | Slot 3 | Slot 4 |
|---|---|---|---|---|
| Slot 1 | - | A0-A0 | A1-A0 | A2-A2 |
| Slot 2 | A0-A0 | - | A2-A2 | A1-A0 |
| Slot 3 | A1-A0 | A2-A2 | - | A1-A1 |
| Slot 4 | A2-A2 | A1-A0 | A1-A1 | - |

FIG. 7 is a diagram of still another connection relationship between all server units in the server in FIG. 4. As shown in FIG. 7, a difference from the connection relationship in FIG. 5 lies in that server units connected to the slot 1 and the slot 4 are a first switching unit and a second switching unit, and server units connected to other slots are service units. The connection relationship corresponding to FIG. 7 is shown in Table 5. In a connection manner shown in FIG. 7, all server units in the server form a dual-star topology, which is applicable to a low-traffic service scenario.

**Table 5 Dual-star topology**

| | Slot 1 | Slot 2 | Slot 3 | Slot 4 |
|---|---|---|---|---|
| Slot 1 | - | A0-A0 | A1-A0 | - |
| Slot 2 | A0-A0 | - | A2-A2 | A1-A0 |
| Slot 3 | A1-A0 | A2-A2 | - | A1-A1 |
| Slot 4 | - | A1-A0 | A1-A1 | - |

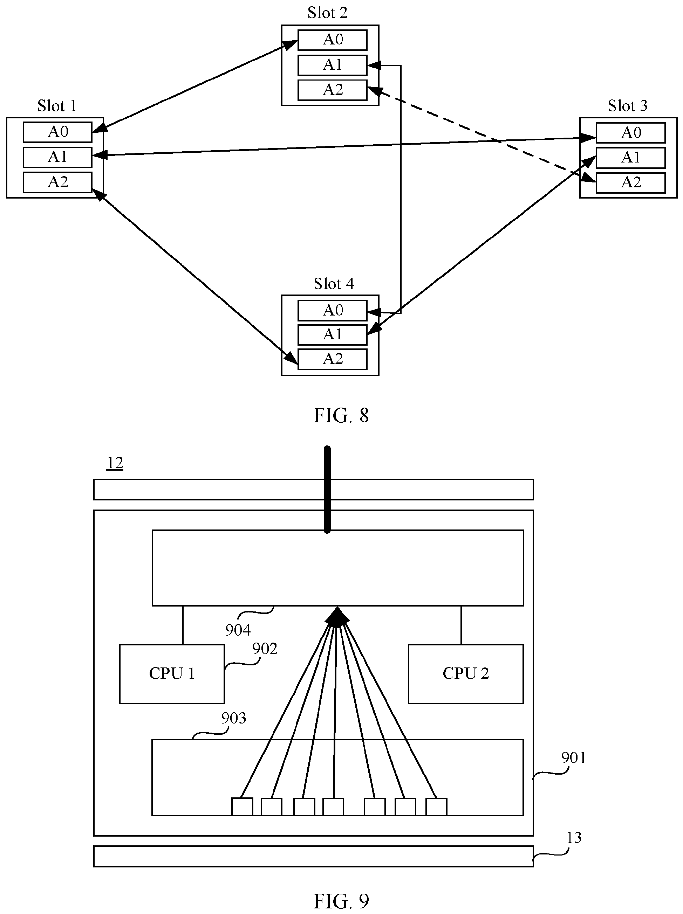

FIG. 8 is a diagram of yet another connection relationship between all server units in the server in FIG. 4. A dashed line in FIG. 8 represents a connection between service units. As shown in FIG. 8, based on FIG. 7, ports, not connected to the first switching unit and the second switching unit, of all service units are interconnected, to ensure that each service unit is connected to all other service unit. The connection relationship between all server units after the connection is shown in Table 4.

In some examples, when a plurality of connection interfaces of the server are arranged in an array (generally in a one-dimensional array), server units 12 connected to two connection interfaces located in a central position of the plurality of connection interfaces serve as the first switching unit and the second switching unit. For example, in FIG. 2, the server units 12 connected to the slot 4 and the slot 5 serve as the first switching unit and the second switching unit. For another example, in FIG. 5, the server units 12 connected to the slot 2 and the slot 3 serve as the first switching unit and the second switching unit. This is because a distance between a slot in the middle and other slots is shorter, and a shorter signal routing distance indicates a lower loss. Therefore, the server units 12 connected to the two connection interfaces located in the central position serve as the first switching unit and the second switching unit. This helps improve signal quality. In another embodiment, server units 12 connected to any two of the connection interfaces may be selected as the first switching unit and the second switching unit while a signal quality requirement is met. For example, in FIG. 7, the server units 12 connected to the slot 1 and the slot 4 serve as the first switching unit and the second switching unit.

In related technologies, different types of servers are usually used in high-traffic and low-traffic service scenarios. For example, a blade server is used in the high-traffic service scenario, and a rack server is used in the low-traffic service scenario. Using two different types of servers is not conductive to system maintenance. The server provided in embodiments of this application is not only applicable to the high-traffic service scenario, but also applicable to the low-traffic service scenario. The server can meet requirements in different communication service scenarios, for example, meet a 5G communication service scenario of a cloud core network. When the server uses dual-star networking, a connection channel between the first switching unit and the second switching unit, a connection channel between the first switching unit and a server unit other than the first switching unit and the second switching unit, and a connection channel between the second switching unit and a server unit other than the first switching unit and the second switching unit are enabled, and a connection channel between all server units other than the first switching unit and the second switching unit is not enabled. The dual-star networking can be used to carry control plane services. The control plane services feature low traffic and a plurality of ports. When the server uses full-interconnection networking, connection channels between all server units are enabled. The full-interconnection networking can be used to carry user plane services. The user plane services feature high traffic, which requires each server unit to be capable of directly interconnecting with a network-side edge (provider edge, PE) device without interconnecting with the PE device via a switch. It can be learned that the server provided in embodiments of this application may be used in different scenarios based on requirements, and different networking modes can be obtained by only exchanging two switching units (that is, the foregoing first switching unit and second switching unit) and two service units. In this case, the networking modes are simple, maintenance is simple, and costs are low.

The following describes a structure of the server unit by using an example.

FIG. 9 is a diagram of a structure of a server unit according to an embodiment of this application. As shown in FIG. 9, the server unit 12 includes a first mainboard 901, a first control module 902, a first interconnection module 903, and a first network module 904, where the first control module 902, the first interconnection module 903, and the first network module 904 are all mounted on the first mainboard 901, and the first network module 904 is electrically connected to the first interconnection module 903 and the first control module 902 separately.

The first interconnection module 903 is configured to connect to another server unit in the server. The first network module 904 is configured to connect to an upper-layer device (not shown in the figure), for example, a switch of an operator, to connect to the external network. The first control module 902 is configured to process data received via the first network module 904, and send the data to the external network via the first network module 904.

Optionally, the first interconnection module 903 includes an interface card, where the interface card includes a plurality of first-side ports and at least one second-side port, the plurality of first-side ports are configured to connect to a same connection interface, and the at least one second-side port is connected to the first network module 904. For example, in FIG. 9, a quantity of first-side ports is equal to or less than a quantity of second-side ports, and each first-side port is connected to one second-side port, so that data from another server unit may be sent to the external network, or data from the external network may be sent to a corresponding server unit. In another embodiment, the quantity of first-side ports is less than the quantity of second-side ports, and each second-side port is separately connected to all first-side ports. This interface card may also be referred to as an interconnection (mesh) card. The interface card further includes a switching chip, where the switching chip is configured to selectively connect the first-side ports to one or more second-side ports.

Optionally, the first network module 904 may include a network interface card, a network processor (network processor, NP), or the like. A type of the network interface card is not limited in embodiments of this application, and a proper network interface card may be selected depending on actual requirements.

Optionally, the first control module 902 includes one or more processors. For example, in FIG. 9, the first control module includes two processors: a CPU 1 and a CPU 2. A type of the processor is not limited in embodiments of this application either, and may be selected depending on actual requirements.

In a low-traffic service scenario, a first switching unit and a second switching unit need to aggregate traffic of all service units, and may adopt the structure shown in FIG. 9. Network modules are arranged in the first switching unit and the second switching unit for connection to an upper-layer device, and there is no need to additionally arrange a switch in the server, thereby helping reduce costs.

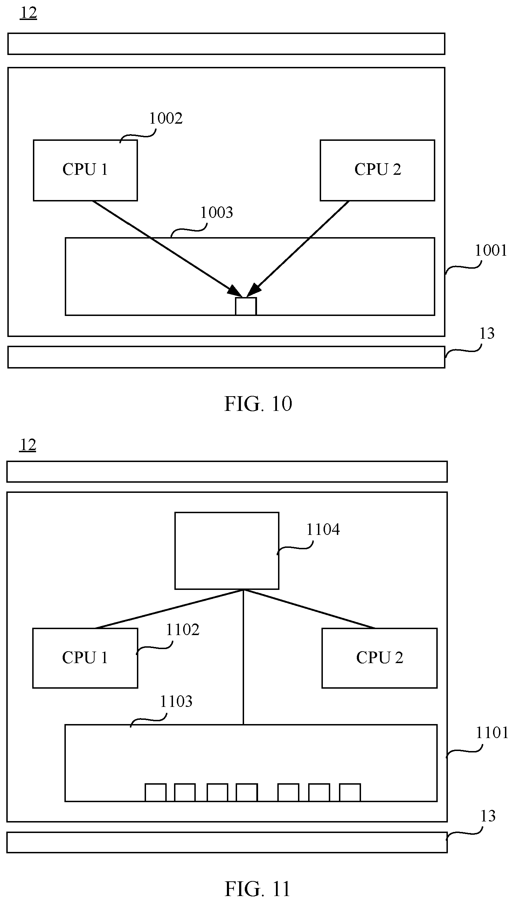

FIG. 10 is a diagram of a structure of another server unit according to an embodiment of this application. As shown in FIG. 10, the server unit 12 includes a second mainboard 1001, a second control module 1002, and a second interconnection module 1003, where the second control module 1002 and the second interconnection module 1003 are mounted on the second mainboard 1001, and the second control module 1002 is electrically connected to the second interconnection module 1003.

The second control unit 1002 includes one or more processors. For example, in FIG. 10, the second control unit includes two processors: a CPU 1 and a CPU 2. The second interconnection module 1003 includes a plurality of ports, and each port is electrically connected to all processors separately.

For content related to the second interconnection module 1003, refer to the first interconnection module 903. In FIG. 10, each first-side port of the second interconnection module 1003 may be connected to each processor separately, to ensure that data that is received by the second interconnection module 1003 from another server unit is forwarded to any processor, and data that is received from any processor is forwarded to any server unit. It should be noted that, only one first-side port is shown in the figure, and another first-side port is omitted.

In another embodiment, each first-side port of the second interconnection module 1003 may be connected to any one of processors that are connected to each other. For example, it is assumed that there are seven first-side ports in total, where three of the first-side ports are connected to the CPU 1, and the other four first-side ports are connected to the CPU 2. In this way, through data forwarding between all processors, data that is received by the second interconnection module 1003 from another server unit may be forwarded to any processor, and data that is received from any processor may be forwarded to any server unit.

In a low-traffic service scenario, because traffic of a service unit is forwarded by the first switching unit and the second switching unit, the service unit may adopt the structure in FIG. 10, without a need to arrange a network module, thereby reducing network interface cards inside the server. This service unit may be referred to as a central switching service unit.

FIG. 11 is a diagram of a structure of still another server unit according to an embodiment of this application. As shown in FIG. 11, the server unit 12 includes a third mainboard 1101, a third control module 1102, a third interconnection module 1103, and a third network module 1104, where the third control module 1102, the third interconnection module 1103, and the third network module 1104 are all mounted on the third mainboard 1101, and the third network module 1104 is electrically connected to the third interconnection module 1103 and the third control module 1102 separately.

Optionally, for content related to the third interconnection module 1103 and the third control module 1102, refer to the first interconnection module 903 and the first control module 902. Detailed descriptions are omitted herein. The third network module 1104 includes but is not limited to a network processor (network processor, NP) or the like, and the NP is configured to perform acceleration processing on data.

In some high-traffic service scenarios, each service unit has a high-traffic data transmission requirement. To reduce a delay, each service unit needs to be capable of directly exchanging data with the external network. In this case, each service unit may adopt the structure in FIG. 11, and the third network module 1104 is connected to the external network, that is, each service unit includes a network module, so that the service unit can access the external network directly via the network module. However, in some other high-traffic service scenarios, only a part of service units needs to directly access the external network. The service unit may adopt the structure in FIG. 11, and the third network module 1104 includes an egress interface connected to the external network. The other part of service units do not need to directly access the external network, but need to directly perform data transmission with another server unit. The service unit may adopt the structure in FIG. 11, and the third network module 1104 does not include an egress interface connected to the external network. In the two types of high-traffic service scenarios, data transmission can be directly performed between all server units. This service unit may be referred to as a distributed service unit. This helps reduce a delay.

In this embodiment of this application, a control module (for example, the first control module 902, the second control module 1002, or the third control module 1102) may further include a memory, configured to store received data, store intermediate data generated in a data processing process, and the like.

In a possible implementation, as shown in FIG. 9 to FIG. 11, the server further includes a backplane 13, and all server units 12 are connected to each other via the backplane 13. In embodiments of this application, the backplane is provided with a plurality of connection channels, one end of each connection channel is configured to connect to one port of a server unit in one connection interface, and the other end is configured to connect to one port of a server unit in another connection interface.

In some examples, the backplane is an optical backplane. In this case, the foregoing connection interface is an optical interface, an interconnection module in each server unit includes an optical module, and the optical module is connected to the optical interface, so that the server unit is connected to the optical backplane. The optical module is configured to convert an electrical signal in the server unit into an optical signal and send the optical signal to another server unit via the optical backplane, and/or convert an optical signal from the optical backplane into an electrical signal, and process the electrical signal. Because a transmission speed of the optical backplane is high, using the optical backplane to implement connection between all server units helps reduce a delay.

Optionally, the optical backplane is implemented by using a plurality of optical fibers, and each optical fiber is one connection channel. Alternatively, the optical backplane is implemented by using an optical waveguide, there are a plurality of optical transmission channels in the optical waveguide, and each optical transmission channel is one connection channel.

In some other examples, the backplane is an electrical backplane. In this case, the foregoing connection interface is an electrical interface, and an interconnection module in each server unit includes an electrical connector, for example, an RJ45 interface. The electrical connector is connected to the electrical interface, to implement connection between the server unit and the electrical backplane.

Optionally, the electrical backplane may be a printed circuit board, and a transmission channel is a trace in the circuit board. A technology for implementing connection between all server units by using the electrical backplane is mature, helping reduce costs.

In another embodiment, the server units 12 may alternatively be directly connected through a cable. One end of the cable is inserted into one service unit 12, and the other end of the cable is inserted into another service unit.

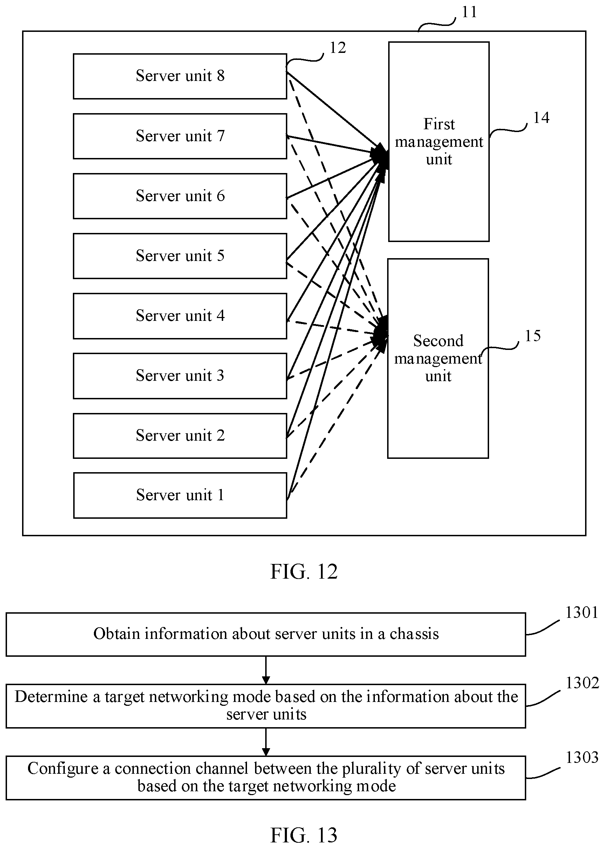

FIG. 12 is a diagram of a structure of still another server according to an embodiment of this application. As shown in FIG. 12, in addition to a chassis 11 and server units 12, the server further includes a first management unit 14. The first management unit 14 is connected to each of server units 12. The first management unit 14 is configured to manage all the server units 12 in the server, for example, control a networking mode of the plurality of server units 12 in the server. For content related to controlling the networking mode of the plurality of servers 12 by the first management unit 14, refer to the following method embodiments. Detailed descriptions are omitted herein.

In some examples, the first management unit 14 is connected to each server unit 12 via the backplane 13. In this case, the backplane 13 further includes a channel that is used to connect the first management unit 14 to each server unit 12. In some other examples, the first management unit 14 is connected to each server unit 12 via another connection structure. The another connection structure includes but is not limited to an inter-integrated circuit (inter-integrated circuit, I2C) bus, a serial peripheral interface (serial peripheral interface, SPI) bus, a network cable, or the like.

Optionally, the server further includes a second management unit 15. The second management unit 15 is connected to each of server units 12 in the server, and the second management unit 15 may serve as a standby unit of the first management unit 14, to improve reliability of the server. For a manner of connecting the second management unit 15 to each server unit 12, refer to the manner of connecting the first management unit 14 to each of the server units 12.

Optionally, the second management unit 15 is electrically connected to the first management unit 14, to implement data synchronization between the first management unit 14 and the second management unit 15. Optionally, the second management unit 15 is connected to the first management unit 14 via an I2C bus, an SPI bus, a network cable, a universal asynchronous receiver/transmitter (universal asynchronous receiver/transmitter, UART), or the like. This is not limited in this application.

An embodiment of this application further provides a blade server management method. The method may be performed by a computer device, and the computer device is the foregoing first management unit or second management unit. As shown in FIG. 13, the method includes steps 1301 to 1303.

1301: Obtain information about all server units in a chassis.

The information about the server units includes types of the server unit. In some examples, the types of the server units may be switching unit and service unit.

The types of the server units may be obtained in either of the following two manners.

Manner 1: The server units store the types of the server units. After each server unit is connected to a corresponding connection interface and is powered on, each server unit sends a type of the server unit to the first management unit, so that the first management unit can obtain the type of each server unit.

Manner 2: A detection pin is arranged in a slot, and a type of a server unit inserted into the slot is determined based on a level of the detection pin.

In some examples, there is one detection pin. After the server unit is inserted into the slot, if a level of the detection pin is a first level, it is determined that the server unit is a service unit; or if a level of the detection pin is a second level, it is determined that the server unit is a switching unit. The first level is greater than or less than the second level.

In some other examples, there are a plurality of detection pins. After the server unit is inserted into the slot, if levels of the plurality of detection pins are a first level combination, it is determined that the server unit is a service unit; or if levels of the plurality of detection pins are a second level combination, it is determined that the server unit is a switching unit. For example, there are three detection pins, the first level combination is 110, and the second level combination is 101, where 1 indicates that a level of the detection pin is a high level, and 0 indicates that a level of the detection pin is a low level.

It should be noted that, in another embodiment, the types of the server units may include switching unit, central switching service unit, and distributed service unit, that is, service units are further classified into two types, so that a target networking mode is more accurately determined based on the information about the server units.

Optionally, the information about the server units further includes location information of the server units. The location information indicates a connection port connected to the server unit, for example, may be an identifier of the connection port. When the connection port is a slot, the identifier of the connection port is a slot identifier.

When the information about the server units is obtained in Manner 1, a correspondence between the received type of the server unit and a receive port may be recorded. For example, a type, received by a connection port 1, of a server unit is a service unit, and a type, received by a connection port 2, of a server unit is a switching unit. When the information about the server units is obtained in Manner 2, a type of a server unit in each slot may be obtained based on a level of a detection pin in each slot.

1302: Determine the target networking mode based on the information about the server unit.

Optionally, the target networking mode is dual-star networking or full-interconnection networking.

In some examples, the first management unit stores a networking policy in advance, where the networking policy indicates a correspondence between a feature of the server units and a networking mode, and the feature of the server units is used to describe a combination manner of the types of the server units. For example, a first combination manner corresponds to a first networking mode, a second combination manner corresponds to a second networking mode, and a third combination manner corresponds to a third networking mode. Correspondingly, in 1302, the target networking mode is determined based on the obtained information about the server units and the networking policy.

For example, step 1302 may include the following two steps:

Step 1: Determine the feature of the server units based on the information about the server units. Step 2: Determine the target networking mode based on the determined feature of the server units and the networking policy.

In Step 2, a networking mode, corresponding to the determined feature of the server units, in the networking policy is determined as the target networking mode. To be specific, the feature of the server units is searched for in the networking policy, and the networking mode corresponding to the found feature of the server units is determined as the target networking mode.

In some examples, the feature of the server units is obtained through conversion based on the information about the server units. For example, the feature of the server units includes a quantity of service units and a quantity of switching units, and the quantity of service units and the quantity of switching units may be obtained through statistics collection based on the types of the server units. In some other examples, the information about the server units is the feature of the server units. For example, the information about the server units includes a type of a server unit corresponding to each connection interface, and the information about the server units may be directly used as the feature of the server units.

In a first possible implementation, the feature of the server units includes at least one of the quantity of service units and the quantity of switching units. That is, there are the following three cases.

Case 1: The feature of the server units includes only the quantity of service units.

In the networking policy, when the quantity of service units is a quantity of server units included in a server, a corresponding networking mode is full-interconnection networking. When the quantity of service units is a difference between a quantity of server units included in a server and 2, a corresponding networking mode is dual-star networking.

For example, assuming that the quantity of server units included in the server is 8, and the feature of the server units is 8, it indicates that the quantity of service units is the quantity of server units included in the server; and a corresponding networking mode is full-interconnection networking.

For another example, assuming that the quantity of server units included in the server is 8, and the feature of the server units is 6, it indicates that the quantity of service units is the difference between the quantity of server units included in the server and 2; and a corresponding networking mode is dual-star networking.

Case 2: The feature of the server units includes only the quantity of switching units.

In the networking policy, when the quantity of switching units is 0, a corresponding networking mode is full-interconnection networking. When the quantity of switching units is 2, a corresponding networking mode is dual-star networking.

Case 3: The feature of the server units includes the quantity of service units and the quantity of switching units.

In the networking policy, a networking mode corresponding to a first combination is full-interconnection networking, and a networking mode corresponding to a second combination is dual-star networking. In the first combination, the quantity of service units is a quantity of server units included in a server, and the quantity of switching units is 0. In the second combination, the quantity of service units is the quantity of server units included in the server minus 2, and the quantity of switching units is 2.

For example, assuming that the quantity of server units included in the server is 8, and the feature of the server units is {8, 0}, it indicates that the quantity of service units is the quantity of server units included in the server, the quantity of switching units is 0, and a corresponding networking mode is full-interconnection networking.

For another example, assuming that the quantity of server units included in the server is 8, and the feature of the server units is {6, 2}, it indicates that the quantity of service units is the quantity of server units included in the server minus 2, the quantity of switching units is 2, and a corresponding networking mode is dual-star networking.

In Case 3, the target networking mode can be more accurately matched.

In other words, in the first possible implementation, when the information about the server units indicates that all server units are service units, it is determined that the target networking mode is full-interconnection networking; or when the information about the server units indicates that the plurality of server units include two switching units and a plurality of service units, it is determined that the target networking mode is dual-star networking.

When the types of the server units are classified into switching unit, central switching service unit, and distributed service unit, step 1302 includes: When the information about the server units indicates that all server units are distributed service units, it is determined that the target networking mode is full-interconnection networking; or when the information about the server units indicates that the plurality of server units include two switching units and a plurality of central switching service units, it is determined that the target networking mode is dual-star networking.

In a second possible implementation, the feature of the server units indicates a quantity and a location of at least one type of server unit. In this implementation, searching for the target networking mode based on a combination of the location and the type of the server unit can reduce a possibility of a networking error.

For example, the feature of the server units may be implemented any one of the following four manners.

Manner 1: The feature of the server units includes only a quantity and locations of service units.

In the networking policy, when the quantity of service units is a quantity of server units included in a server, a corresponding networking mode is full-interconnection networking. When the quantity of service units is a difference between a quantity of server units included in the server and 2, and the service units are at target locations, a corresponding networking mode is dual-star networking.

For example, assuming that the quantity of server units included in the server is 8, and the feature of the server units is {8, slots 1 to 8}, it indicates that the quantity of service units is the quantity of server units included in the server, and a corresponding networking mode is full-interconnection networking. When the quantity of service units is the quantity of server units included in the server, it indicates that units at all locations are service units. Therefore, a step of matching the locations of the service units may be omitted. During implementation, matching the locations of the service units may alternatively be performed. In this case, in the networking policy, when the quantity of service units is the quantity of server units included in the server and the server units are at target locations (for example, slots 1 to 8), a corresponding networking mode is full-interconnection networking.

For another example, assuming that the quantity of server units included in the server is 8, the target locations are slots 1 to 3 and slots 6 to 8, and the feature of the server units is {8, slots 1 to 3 and slots 6 to 8}, it indicates that the quantity of service units is the difference between the quantity of server units included in the server and 2, and the service units are at the target locations; and a corresponding networking mode is dual-star networking.

Manner 2: The feature of the server units includes only a quantity and locations of switching units.

In the networking policy, when the quantity of switching units is 0, a corresponding networking mode is full-interconnection networking. When the quantity of switching units is 2, and the switching units are at target locations, a corresponding networking mode is dual-star networking. Herein, the target locations are middle locations among a plurality of connection interfaces of the chassis.

For example, assuming that a quantity of server units included in a server is 8, the target locations are slots 4 and 5, and the feature of the server units is {2, slot 4 and slot 5}, it indicates that the quantity of switching units is 2, and the switching units are at the target locations; and a corresponding networking mode is dual-star networking.

Manner 3: The feature of the server units includes a quantity and locations of service units and a quantity and locations of switching units.

In the networking policy, a networking mode corresponding to a first combination is full-interconnection networking, and a networking mode corresponding to a second combination is dual-star networking. In the first combination, the quantity of service units is a quantity of server units included in a server, and the quantity of switching units is 0. In the second combination, the quantity of service units is the quantity of server units included in the server minus 2, and the service units are at first target locations; and the quantity of switching units is 2, and the switching units are at second target locations.

For example, assuming that the quantity of server units included in the server is 8, and the feature of the server units is {8, 0}, it indicates that the quantity of service units is the quantity of server units included in the server, the quantity of switching units is 0, and a corresponding networking mode is full-interconnection networking.

For another example, assuming that the quantity of server units included in the server is 8, and the feature of the server units is {6, slots 1 to 3 and slots 6 to 8} and {2, slot 4 and slot 5}, it indicates that the quantity of service units is the quantity of server units included in the server minus 2, the service units are at the first target locations, the quantity of switching units is 2, the switching units are at the second target locations, and a corresponding networking mode is dual-star networking.

Manner 4: The feature of the server units is an array (or a set), and each element in the array indicates a type of a server unit connected to a corresponding connection interface.

If there are two types of server units, each element may be represented by using one bit (bit). When the element is 1, it indicates that the type of the server unit is a first type. When the element is 2, it indicates that the type of the server unit is a second type.

In the networking policy, a networking mode corresponding to a first combination is full-interconnection networking, and a networking mode corresponding to a second combination is dual-star networking. In the first combination, a server unit connected to each connection interface is a service unit. In the second combination, a server unit corresponding to a first target location is a service unit, and a server unit corresponding to a second target location is a switching unit.

For example, assuming that a quantity of server units included in a server is 8, where 1 indicates that a type of a server unit is a service unit, and 0 indicates that a type of a server unit is a switching unit. If the feature of the server units is {1, 1, 1, 0, 0, 1, 1, 1}, it indicates that server units corresponding to first target locations (slots 1 to 3 and slots 6 to 8) are all service units, and server units corresponding to second target locations (slots 4 and slots 5) are switching units, and it is determined that the target networking mode is full-interconnection networking.

For another example, if the feature of the server units is {1, 1, 1, 1, 1, 1, 1, 1}, it indicates that a server unit connected to each connection interface is a service unit, and it is determined that the target networking mode is full-interconnection networking.

In other words, in the second possible implementation, when the information about the server units indicates that all server units are service units, it is determined that the target networking mode is full-interconnection networking; or when the information about the server units indicates that the plurality of server units include two switching units and a plurality of service units, and the two switching units are at target locations, it is determined that the target networking mode is dual-star networking.

If there are three types of server units, each element may be represented by using two bits (bit), and a value combination of the two bits respectively corresponds to one of the three types of server unit. A correspondence manner of the value combination and the type of the server unit may be set depending on actual requirements. This is not limited in embodiments of this application.

1303: Configure a connection channel between all server units based on the target networking mode.

In this way, a corresponding connection relationship in the target networking mode can be implemented.

In 1303, configuration information may be sent to each server unit based on the target networking mode, where the configuration information is used to configure a connection channel corresponding to the server unit, for example, enable or disable the connection channel.

When the target networking mode is dual-star networking, a connection channel between the first switching unit and all other server units is enabled, a connection channel between the second switching unit and all other server units is enabled, and a connection channel between server units other than the first switching unit and the second switching unit is disabled.

If the target networking mode is full-interconnection networking, all connection channels are enabled.

In this embodiment of this application, obtaining the information about all server units can implement automatic networking of the server units, thereby lowering maintenance difficulty and reducing networking costs.

Optionally, the method further includes: outputting prompt information when the target networking mode corresponding to the information about the plurality of server units fails to be determined.

For example, if the networking mode corresponding to the determined feature of the server units does not exist in the networking policy, it indicates that the target networking mode does not exist, and the prompt information may be output. The prompt information may be used to prompt to replace a server unit.

A manner of outputting the prompt information is not limited in embodiments of this application. For example, the prompt information may be output by using a display apparatus, or the prompt information may be output by using an audible and visual alarm or the like. When the prompt information is output by using the display apparatus, content of the prompt information is not limited in embodiments of this application. For example, the content of the prompt information may include "Server units are an unknown combination", "The networking mode is incorrect", or the like. In this way, a networking error can be located more easily, and network maintenance efficiency can be improved.

If the feature of the server units further includes the location of the server unit, when the networking mode corresponding to the determined feature of the server units does not exist in the networking policy, the output prompt information indicates a location of the server unit that needs to be replaced. For example, the content of the prompt information may include: "Please replace a server unit in a slot 1".

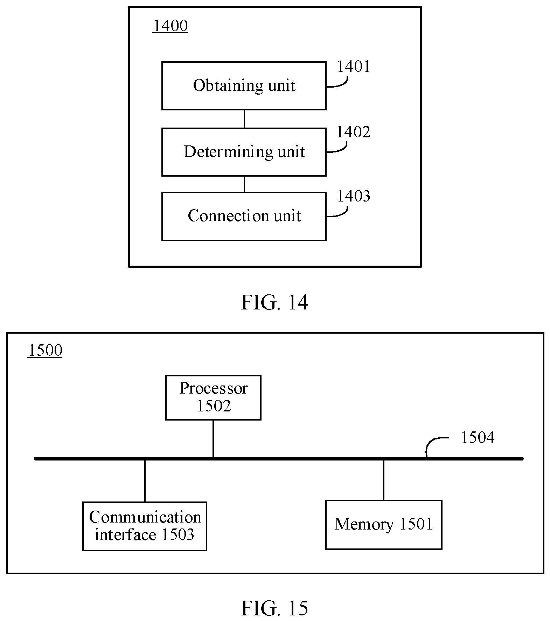

FIG. 14 is a block diagram of a server management apparatus according to an embodiment of this application. The apparatus may be implemented as an entirety or a part of a server management unit by using software, hardware, or a combination thereof. As shown in FIG. 14, the management apparatus 1400 includes an obtaining unit 1401, a determining unit 1402, and a connection unit 1403.

The obtaining unit 1401 is configured to obtain information about a plurality of server units. The determining unit 1402 is configured to determine a target networking mode based on the information about the server units, where the target networking mode indicates a connection relationship between the plurality of server units. The connection unit 1403 is configured to enable a connection channel between the plurality of server units based on the target networking mode.

Optionally, the determining unit 1402 is configured to: when the plurality of server units are all service units, determine that the target networking mode is full-interconnection networking; or when the plurality of server units include two switching units and a plurality of service units, determine that the target networking mode is dual-star networking; or when the plurality of server units include two switching units and a plurality of service units, and the two switching units are at target locations, determine that the target networking mode is dual-star networking.

It should be noted that, when the server management apparatus provided in the foregoing embodiment manages a server, division into the foregoing functional units is used merely as an example for illustration. During actual application, the foregoing functions may be allocated to different functional units and implemented based on a requirement. To be specific, an inner structure of a device is divided into different functional units, to implement all or some of the functions described above. In addition, the server management apparatus provided in the foregoing embodiment and the embodiments of the server management method belong to a same concept. For a specific implementation process, refer to the method embodiments. Details are not described herein again.

In some embodiments, a computer device is further provided. The computer device may be the first management unit or the second management unit. The computer device includes a processor and a memory, the memory is configured to store a software program, and the processor runs or executes the software program stored in the memory, to cause the computer device to implement the server management method provided in the foregoing method embodiments.

FIG. 15 provides an example of a possible architecture of a computer device 1500. As shown in FIG. 15, the computer device 1500 includes a memory 1501, a processor 1502, a communication interface 1503, and a bus 1504. The memory 1501, the processor 1502, and the communication interface 1503 implement a communication connection to each other through the bus 1504.

The memory 1501 may be a read-only memory (read-only memory, ROM), a static storage device, a dynamic storage device, or a random access memory (random access memory, RAM). The memory 1501 may store a program. When the program stored in the memory 1501 is executed by the processor 1502, the processor 1502 and the communication interface 1503 are configured to perform a server management method. The memory 1501 may further store a data set. For example, a part of storage resources in the memory 1501 are divided into a data storage module, configured to store information about a server unit, a networking policy, and the like.

The processor 1502 may be a general-purpose central processing unit (central processing unit, CPU), a microprocessor, an application-specific integrated circuit (application-specific integrated circuit, ASIC), a graphics processing unit (graphics processing unit, GPU), or one or more integrated circuits.

Alternatively, the processor 1502 may be an integrated circuit chip, and has a signal processing capability. In an implementation process, some or all functions of a signal processing apparatus in this application may be implemented through a hardware integrated logic circuit in the processor 1502, or through instructions in a form of software. The processor 1502 may alternatively be a general-purpose processor, a digital signal processor (digital signal processor, DSP), an ASIC, a field programmable gate array (field programmable gate array, FPGA) or another programmable logic device, a discrete gate or transistor logic device, or a discrete hardware component. The processor may implement or perform the methods disclosed in the foregoing embodiments of this application. The general-purpose processor may be a microprocessor, or the processor may be any conventional processor or the like. The steps of the method disclosed with reference to embodiments of this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1501. The processor 1502 reads information in the memory 1501, and completes some functions of the server management apparatus in embodiments of this application in combination with hardware of the processor 1502.

The communication interface 1503 uses a transceiver module, for example but not limited to, a transceiver, to implement communication between the computer device 1500 and another device or a communication network. For example, information (for example, the information about the server units) may be obtained through the communication interface 1503.

The bus 1504 may include a path for transmitting information between components (such as the memory 1501, the processor 1502, and the communication interface 1503) of the computer device 1500.

In some embodiments, a computer-readable storage medium is further provided. The computer-readable storage medium stores computer instructions. When the computer instructions stored in the computer-readable storage medium is executed by an optical communication device, the optical communication device is caused to perform the server management method provided in the foregoing method embodiments.

In some embodiments, a computer program product is further provided. The computer program product includes one or more computer program instructions. When the computer program instructions are loaded and run by a computer, the computer is caused to perform the server management method provided in the foregoing method embodiments.

In some embodiments, a chip is further provided, including a memory and a processor. The memory is configured to store computer instructions, and the processor is configured to invoke the computer instructions from the memory and run the computer instructions, to perform the server management method provided in the foregoing method embodiments.

Unless otherwise defined, technical terms or scientific terms used herein should have a general meaning understood by a person of ordinary skill in the art of this application. In the specification and claims of this application, terms such as "first", "second", and "third" do not indicate any order, quantity, or importance, but are merely used to distinguish different components. Likewise, "a/an", "one", or the like is not intended to indicate a quantity limitation either, but is intended to indicate existing at least one. Terms such as "include" or "comprise" mean that an element or object before the "include" or "comprise" encompasses elements or objects and their equivalents listed after the "include" or "comprise", and other elements or objects are not excluded. "A and/or B" indicates that the following three cases exist: Case 1: A; Case 2: B; and Case 3: A and B.

The foregoing descriptions are merely an embodiment of this application, but are not intended to limit this application. Any modification, equivalent replacement, improvement, or the like made within the spirit and principle of this application shall fall within the protection scope of this application.

## Claims

1. A server, wherein the server comprises a chassis and a plurality of server units, the plurality of server units are all located in the chassis, and any two of the plurality of server units are connected; and
the plurality of server units have a first networking mode and a second networking mode, wherein the first networking mode and the second networking mode are each used to describe a connection relationship between the plurality of server units, and a connection relationship described in the first networking mode is different from a connection relationship described in the second networking mode.

2. The server according to claim 1, wherein the chassis comprises a plurality of connection interfaces, and each of the plurality of server units is connected to one of the plurality of connection interfaces;
the plurality of server units comprise a first switching unit, a second switching unit, and at least two service units, a first service unit among the at least two service units comprises a plurality of ports, the plurality of ports comprise a first port connected to the first switching unit, a second port connected to the second switching unit, and a third port connected to a second service unit, and the first service unit and the second service unit are any two of the at least two service units; and
when the first service unit is connected to different connection interfaces among the plurality of connection interfaces, an arrangement location of the first port of the first service unit among the plurality of ports of the first service unit remains unchanged, and an arrangement location of the second port of the first service unit among the plurality of ports of the first service unit remains unchanged.

3. The server according to claim 2, wherein the plurality of connection interfaces are arranged in an array, and a connection interface connected to the first switching unit and a connection interface connected to the second switching unit are two connection interfaces located in a central position of the plurality of connection interfaces.

4. The server according to any one of claims 1 to 3, wherein the first networking mode is dual-star networking, and the second networking mode is full-interconnection networking.

5. The server according to claim 2, wherein at least one of the first switching unit and the second switching unit comprises:
a first mainboard, a first control module, a first interconnection module, and a first network module, wherein the first control module, the first interconnection module, and the first network module are all mounted on the first mainboard, and the first control module is electrically connected to the first interconnection module and the first network module separately.

6. The server according to claim 2, wherein the service unit comprises a second mainboard, a second control module, and a second interconnection module, wherein the second control module and the second interconnection module are mounted on the second mainboard, and the second control module is electrically connected to the second interconnection module; or
the service unit comprises a third mainboard, a third control module, a third interconnection module, and a third network module, wherein the third control module, the third interconnection module, and the third network module are all mounted on the third mainboard, and the third network module is electrically connected to the third interconnection module and the third control module separately.

7. The server according to any one of claims 1 to 6, wherein the server further comprises a first management unit, wherein the first management unit is connected to each of the plurality of server units, and the first management unit is configured to control a networking mode of the plurality of server units.

8. The server according to any one of claims 1 to 7, wherein the server is a blade server.

9. A server management method, wherein the method comprises:
obtaining information about a plurality of server units in a chassis;
determining a target networking mode based on the information about the plurality of server units, wherein the target networking mode indicates a connection relationship between the plurality of server units; and
configuring a connection channel between the plurality of server units based on the target networking mode.

10. The method according to claim 9, wherein the information about the server units comprises types of the server units, or the information about the server units comprises types of the server units and locations of the server units.

11. The method according to claim 9 or 10, wherein the determining the target networking mode based on the information about the plurality of server units comprises:
when the plurality of server units are all service units, determining that the target networking mode is full-interconnection networking; or
when the plurality of server units comprise two switching units and a plurality of service units, determining that the target networking mode is dual-star networking; or
when the plurality of server units comprise two switching units and a plurality of service units, and the two switching units are at target locations, determining that the target networking mode is dual-star networking.

12. A server management apparatus, wherein the apparatus comprises:
an obtaining unit, configured to obtain information about a plurality of server units;
a determining unit, configured to determine a target networking mode based on the information about the server units, wherein the target networking mode indicates a connection relationship between the plurality of server units; and
a connection unit, configured to configure a connection channel between the plurality of server units based on the target networking mode.

13. The apparatus according to claim 12, wherein the information about the server units comprises types of the server units, or the information about the server units comprises types of the server units and locations of the server units.

14. The apparatus according to claim 12 or 13, wherein the determining unit is configured to: when the plurality of server units are all service units, determine that the target networking mode is full-interconnection networking; or when the plurality of server units comprise two switching units and a plurality of service units, determine that the target networking mode is dual-star networking; or when the plurality of server units comprise two switching units and a plurality of service units, and the two switching units are at target locations, determine that the target networking mode is dual-star networking.

15. A computer device, wherein the computer device comprises a processor and a memory, the memory is configured to store a software program, and the processor runs or executes the software program stored in the memory, to cause the computer device to implement the method according to any one of claims 9 to 11.

16. A computer-readable storage medium, wherein the computer-readable storage medium is configured to store program code to be executed by a processor, and the program code comprises instructions for implementing the method according to any one of claims 9 to 11.
